# EUROPEAN PATENT APPLICATION

(11) **EP 4 671 037 A2**
(43) Date of publication of application: **31.12.2025**
(21) Application number: 25214532.1
(22) Date of filing: 01.11.2024
(51) Int. Cl.: B60L 53/53

(54) **MOVABLE CHARGING VEHICLE**

(30) Priority: 02.11.2023 FI 20236220
(62) Divisional of application: 24210336.4
(71) Applicant: Rebelvolt Oy, 05200 Rajamäki (FI)
(72) Inventor: Karppanen, Pekka, 05200 Rajamäki (FI)
(74) Representative: Primrose Oy

(57) **Abstract**

The invention relates to a movable charging vehicle (10) comprising a platform (9, 11, 12, 13, 14, 15, 16, 17, 19) for supporting charging vehicle modules (40, 41, 42, 43, 44, 45, 20, 21, 30), a battery module comprising electrical batteries (40, 41, 42, 43, 44, 45), a power converter module comprising a converter device (20, 21) electrically connected to the one or more electrical batteries (40, 41, 42, 43, 44, 45), the converter device being configured to convert the direct current to alternating current, a power distribution unit (30) comprising a power outlet (33) electrically connected to the converter device (20, 21), and the platform (9, 11, 12, 13, 14, 15, 16, 17, 19) comprises a thermally insulated battery chamber (100), the one or more one or more electrical batteries (40, 41, 42, 43, 44, 45) are arranged inside the thermally insulated battery chamber (100).

## Description

### FIELD OF THE INVENTION

The present invention relates to a movable charging vehicle and more particularly to a movable charging vehicle according to preamble of claim 1.

### BACKGROUND OF THE INVENTION

Movable power stations are used in locations where the is no access to fixed electricity network. The movable power station may be transported to a location in which there is no access to the fixed electricity network. The movable power station provides a temporary electricity supply when needed. Conventional high-capacity movable power station comprises a diesel engine which is configured to generate electrical energy to be used by an external device which is connected to a power output of the movable power station. The diesel engine provides momentary electricity generation.

The diesel engine of the conventional movable power station generates emission to the atmosphere and causes considerable noise. The diesel engine also requires refuelling and handling environmentally hazardous material.

### BRIEF DESCRIPTION OF THE INVENTION

An object of the present invention is to provide a movable charging vehicle so as to overcome or at least alleviate the prior art disadvantages.

The objects of the invention are achieved by a movable charging vehicle which is characterized by what is stated in the independent claim 1.

The preferred embodiments of the invention are disclosed in the dependent claims.

The invention is based on the idea of providing a movable charging vehicle comprising a platform for supporting charging vehicle modules, a battery module comprising electrical batteries, a power converter module comprising at least one converter device electrically connected to the one or more electrical batteries of the battery module, the at least one converter device of the power converter module being configured to convert the direct current to alternating current and a power distribution unit comprising a power outlet electrically connected to at least one converter device of the power converter module, the power outlet of the power distribution module being configured to output alternating current from the movable charging vehicle.

According to the invention, the platform comprises a thermally insulated battery chamber, the one or more one or more electrical batteries of the battery module are arranged inside the thermally insulated battery chamber.

Accordingly, the platform comprises a thermally insulated battery chamber, the one or more one or more electrical batteries of the battery module are arranged inside the thermally insulated battery chamber. The insulated battery chamber protects the electrical batteries against cold or hot atmospheric temperatures and equalizes temperature variations.

In some embodiments, the movable charging vehicle comprises a heating arrangement arranged to provide thermal energy generated by the one or more converter devices of the power converter module during use to the thermally insulated battery chamber. Thus, the thermal energy generated by one or more of the converter devices during converting direct current to alternating current and / or alternating current to direct current is provided into the thermally insulated battery chamber for heating.

The converter device may be an inverter or a rectifier or the converter device may comprise both an inverter and a rectifier.

Operation of the electrical batteries becomes compromised when the operation temperature becomes low. Thus, keeping temperature of the electrical batteries at a certain higher level enables maintaining efficient operation of the electrical batteries.

The lithium iron phosphate battery cells limited operation temperature. Operation of lithium iron phosphate battery cells is compromised when the operation temperature is near 0 degrees Celsius or less. Therefore, maintaining the operation temperature of the lithium iron phosphate battery cell well above 0 degrees Celsius enables maintaining efficient operation of the electrical batteries.

In some embodiments, the heating arrangement comprises the one or more converter devices arranged inside the thermally insulated battery chamber and the one or more converter devices arranged to release thermal energy into the thermally insulated battery chamber during use. As the one or more converter devices are provided to the thermally insulated battery chamber, the thermal energy generated by the converter devices during use is released directly into the thermally insulated battery chamber.

In some embodiments, the one or more converter devices are arranged outside the thermally insulated battery chamber, and that the heating arrangement comprises one or more heat transfer elements arranged to transfer thermal energy from the one or more converter devices into the thermally insulated battery chamber. Accordingly, the thermal energy generated by the converter devices during use is transferred to the from the one or more converter devices into the thermally insulated battery chamber with the one or more heat transfer elements.

In some embodiments, the one or more converter devices comprise a cooling system arranged to cool the one or more converter devices and discharge thermal energy from the one or more converter devices. The cooling system removes thermal energy from the converter device and discharges the collected removed thermal energy from the converter device.

In some embodiments, the cooling system is an air cooling system arranged to discharge heated air from the one or more converter devices. The air cooling system is configured to generate a cooling air flow from the converter device and the cooling air flow is heated and transfers thermal energy from the converter device.

In some embodiments, the one or more heat transfer elements are provided in connection with the cooling system of the one or more converter devices and arranged to transfer thermal energy from the cooling system of the one or more converter devices into the thermally insulated battery chamber. Accordingly, the heat transfer element is arranged to transfer thermal energy from the cooling system of the converter device into the thermally insulated battery chamber.

In some embodiments, the one or more heat transfer elements comprise a flow duct arranged to transfer heated air discharged from the one or more converter devices or the cooling system thereof into the thermally insulated battery chamber. Thus, the flow duct enables transporting the heated air flow from the converter device into the thermally insulated battery chamber.

In some other embodiments, the one or more heat transfer elements comprise a heat conduction element arranged to transfer thermal energy from the one or more converter devices or the cooling system thereof into the thermally insulated battery chamber with conduction. The heat conduction element may be for example an aluminium heat conduction element or copper heat conduction element. The heat conduction element is arranged to extend from the converter device into the thermally insulated battery chamber.

In some embodiments, the power distribution unit is arranged outside the thermally insulated battery chamber.

In some other embodiments, the power outlet of the power distribution unit is arranged outside the thermally insulated battery chamber.

Arranging the power distribution unit and / or the power outlet outside the thermally insulated battery chamber enables using the movable charging vehicle without opening the thermally insulated battery chamber and subjecting the electrical batterie to outside temperature.

In some embodiments the movable charging vehicle comprises a platform for supporting charging vehicle modules, a battery module comprising one or more electrical batteries, a power converter module comprising at least one converter device electrically connected to the one or more electrical batteries of the battery module, the at least one converter device of the power converter module being configured to convert the direct current to alternating current, a power distribution unit comprising a power outlet electrically connected to at least one converter device of the power converter module, the power outlet of the power distribution module being configured to output alternating current from the movable charging vehicle. The one or more electrical batteries of the battery module are supported to the platform with a floating battery support structure. The platform comprises a lower support member, the one or more electrical batteries are supported on the lower support member. The floating battery support structure comprises one or more lower damping elements provided between the lower support member and the one or more electrical batteries.

According to the invention the floating battery support structure comprises one or more upper damping elements, and the one or more electrical batteries are arranged in vertical direction between the one or more lower damping elements and the one or more upper damping elements, and the floating battery support structure comprises one or more compression members arranged to compress the one or more electrical batteries between the one or more lower damping elements and the one or more upper damping elements.

The one or more batteries are supported on the one or more lower damping elements and the lower damping element is arranged to prevent or dampen shocks and vibrations from the platform and from the lower support member to the one or more batteries in vertical direction. The one or more electrical batteries are arranged in vertical direction between the one or more lower damping elements and the one or more upper damping elements such that the one or more electrical batteries on opposite sides. Thus, the compression members are arranged to compress the one or more lower damping elements towards or against the one or more electrical batteries and the one or more upper damping elements towards or against the one or more electrical batteries. Thus, the compression members and the one or more lower damping elements and the one or more upper damping elements are arranged to secure the one or more batteries and prevent the one or more batteries from moving in the movable charging vehicle and / or in relation to the platform.

The movable charging vehicle provides power station which may be transported to a desired location for providing alternating current to an external electrical device. The external electrical device may be any kind of electrical device.

In some embodiments, the movable charging vehicle is a towable charging vehicle. The towable charging vehicle may be towed with a car, truck or the like towing vehicle to the desired location and separated from the towing vehicle. Thus, the towable charging vehicle may be left to a desired location.

In some embodiments, in some embodiments, the movable charging vehicle is a car, truck, van or the like vehicle. The charging vehicle modules are provided to a trunk or storage space of the vehicle. Thus, the charging vehicle modules are provided as integral part of the vehicle.

In some embodiments, the movable or towable charging vehicle is a trailer. Accordingly, the platform of the movable or towable charging vehicle is a trailer comprising at least two tires. The charging vehicle modules are arranged to the trailer space. The charging trailer may be transported easily to a desired location and separated from the towing vehicle.

In some embodiments, the charging vehicle is configured to generate to the power outlet of the power distribution module a continuous output power of at least 10 kW, at least 25 kW, or at least 50 kW. The high continuous output power enables providing power to external devices or external systems having high demand.

In some embodiments, the one or more electrical batteries of the battery module are configured to provide capacity of at least 50 kWh, or at least 100 kWh, or at least 200 kWh. The high capacity of the battery module enables prolonged electricity supply. The 200 kWh capacity corresponds approximately 3 days electricity demand of a separate town house.

In some embodiments, total mass of the movable charging vehicle is less than 1600 kg. When the total mass of the movable or towable charging vehicle at less than 1600 kg, it may be towed with any car and also with small personal cars. The weight less than 1600 kg also enables the movable or towable charging vehicle to be transported to locations having weak or soft road or terrain conditions.

In some embodiments, the platform and /or support members thereof are made of aluminium. Aluminium provides necessary structural strength together with lightweight structure.

In some embodiments, the one or more electrical comprise a lithium iron phosphate (LiFePo₄) battery cell or a lithium titanate (Li₄Ti₅O₁₂) battery cell.

The lithium iron phosphate battery cell offers a considerably longer cycle life than other lithium-ion battery cells. Under most conditions lithium iron phosphate battery cell supports more than 3,000 charging cycles, and under optimal conditions more than 10,000 charging cycles. Further, thermal and chemical stability of the lithium iron phosphate battery cell provides advantage over other lithium-ion battery cells. This improves battery safety as lithium iron phosphate is an intrinsically safer cathode material.

In some embodiments, the one or more electrical batteries of the battery module are supported to the platform with a floating battery support structure. The floating battery support structure prevents or dampens shocks and vibrations subjected to the electrical batteries of the battery module during movement or towing or transportation of the movable charging vehicle.

In some embodiments, the floating battery support structure comprises one or more damping elements arranged between the one or more electrical batteries of the battery module and the platform. The one or more electrical batteries are supported on the one or more damping elements, and the one or more damping elements are further supported to the platform. The one or more damping elements prevent or dampen shocks and vibrations from the platform to the one or more electrical batteries of the battery module.

In some embodiments, the battery module comprise two or more electrical batteries and the floating battery support structure comprises one or more battery damping elements arranged between adjacent electrical batteries. The two or more electrical batteries are connected to adjacent electrical battery via the one or more battery damping elements. The battery damping elements are provided between adjacent electrical batteries. The battery damping elements prevent or dampen shocks and vibrations from traveling between adjacent electrical batteries.

In some embodiments, two or more electrical batteries are arranged adjacent to each other in horizontal direction and the one or more battery damping elements are arranged in horizontal direction between adjacent electrical batteries.

In some embodiments, two or more electrical batteries are arranged adjacent to each other in vertical direction and the one or more battery damping elements are arranged in vertical direction between adjacent electrical batteries.

In some embodiments, two or more electrical batteries are arranged adjacent to each other in horizontal direction and in vertical direction, and there are one or more battery damping elements are arranged in horizontal direction between horizontally adjacent electrical batteries, and one or more battery damping elements are arranged in vertical direction between vertically adjacent electrical batteries.

In some embodiments, the platform comprises one or more side support members, the one or more electrical batteries are supported to at least one of the one or more side support members, and the floating battery support structure comprises one or more side damping elements provided between the at least one of the one or more side support members and the one or more electrical batteries. The side damping elements are provided between the one or more electrical batteries and the one or more side support members of the platform in horizontal direction for preventing or damping shocks and vibrations from the platform and from the side support members to the one or more batteries in horizontal direction.

In some embodiments, the at least one converter device of the power converter module is supported to the platform with a floating component support structure.

In some other embodiments, the power distribution unit is supported to the platform with a floating component support structure.

In some further embodiments, the at least one converter device of the power converter module and the power distribution unit are supported to the platform with a floating component support structure.

The floating component support structure prevents or dampens shocks and vibrations subjected to the power distribution unit and / or the at least one converter device of the power converter module during movement or towing or transportation of the movable charging vehicle.

In some embodiments, the floating component support structure comprises one or more component damping members arranged between the at least one converter device and the platform, or between the power distribution unit and the platform, or between the at least one converter device and the platform and between the power distribution unit and the platform. The one or more component damping members are arranged to separate the at least one converter device and / or the power distribution unit from the platform and prevent or dampen dampens shocks and vibrations from the platform.

In some embodiments, the damping elements, or the component damping elements or the damping elements, or the component damping elements are made of elastic material, or comprise an elastic structure, or comprise an elastic structure made of elastic material. Elastic material or elastic structure provides damping properties to the damping elements.

The elastic material may be any known elastic material such as rubber, plastic, foam material, or any other soft or elastic material.

The elastic structure may be any known elastic structure such as structure comprising one or more springs, elastic elements, or the like structure providing elastic properties.

In some embodiments, the platform of the movable charging vehicle is a trailer comprising at least two tires, and the trailer comprises trailer suspension elements in connection with the at least two tires. The trailer suspension elements and the floating battery support structure provide a double damping effect enabling effective damping or shocks and vibrations to the one or more electrical batteries. Further, the trailer suspension elements and the floating component support structure provide a double damping effect enabling effective damping or shocks and vibrations to the at least one converter device of the power converter module and / or the power distribution unit.

In some embodiments the movable charging vehicle comprises a battery module comprising electrical batteries, a power converter module comprising at least one converter device electrically connected to the one or more electrical batteries of the battery module, the at least one converter device of the power converter module being configured to convert the direct current to alternating current, and a power distribution unit comprising a power outlet electrically connected to at least one converter device of the power converter module, the power outlet of the power distribution module being configured to output alternating current from the movable charging vehicle.

The invention is also based on an idea of providing a movable charging vehicle. The movable charging vehicle comprises a battery module comprising electrical batteries, a power converter module comprising at least one converter device electrically connected to the one or more electrical batteries the battery module, the at least one converter device of the power converter module being configured to convert the direct current to alternating current, a power distribution unit comprising a power outlet electrically connected to at least one converter device of the power converter module, the power outlet of the power distribution module being configured to output alternating current from the movable charging vehicle, and the battery module comprises two or more electrical batteries arranged in parallel electrical connection with each other and electrically connected to the at least one converter device of the power converter module.

Accordingly, The battery module comprises two or more electrical batteries arranged in parallel electrical connection with each other and electrically connected to the at least one converter device of the power converter module. This provides operational certainty and security as failure of one electrical battery does not have an effect on operation of the other electrical batteries arranged in the electrical parallel connection and electrical power can still be outputted from the power outlet.

In some embodiments, the converter module comprises at least two converter devices electrically connected to the two or more electrical batteries and to the power outlet of the power distribution unit. Providing two or more converter devices provides operational certainty and security as failure of the converter device enables maintaining power output via the power outlet.

In some embodiments, the battery module comprises a first battery group comprising two or more first electrical batteries and a second battery group two or more second electrical batteries, the power converter module comprises a first converter device and a second converter device, the two or more first electrical batteries of the first battery group are arranged in parallel connection with each other and electrically connected to first converter device, the two or more second electrical batteries of the second battery group are arranged in parallel connection with each other and electrically connected to second converter device, the first converter device is electrically connected to the power outlet of the power distribution unit, and the second converter device is electrically connected to the power outlet of the power distribution unit. Accordingly, there are two or more operationally separate battery-converter groups which are connected to the power outlet such that any failure in one battery-converter group has no effect on other battery-converter groups as the converter device are arranged in parallel electrical connection to the power outlet.

In some embodiments, the one or more first electrical batteries the first battery group are further electrically connected to the second converter device, and the one or more second electrical batteries of the second battery group are further electrically connected to the first converter device. Accordingly, failure of one converter device does not have an effect on the overall capacity of the movable charging vehicle from the electrical batteries to the power outlet.

In some embodiments, the one or more first electrical batteries of the first battery group and the one or more second electrical batteries of the second battery group are arranged in parallel connection with each other. This further provides operational certainty to each other battery groups as the battery group remains operational if there is failure of one electrical battery of the battery group.

In some embodiments, the first converter device and the second converter device are arranged in parallel connection with each other and electrically connected to the power outlet of the power distribution unit. When the converter devices are further arranged in parallel electrical connection failure of one converter device has no effect on the overall capacity of the movable charging vehicle from the electrical batteries to the power outlet.

In some embodiments, the battery module comprises two or more electrical batteries arranged in parallel connection with each other, the converter module comprises at least two converter devices arranged in parallel connection with each other, the two or more parallel connected electrical batteries are electrically connected to the at least two parallel connected converter devices, and the at least two parallel connected converter devices are connected to the power outlet of the power distribution unit. This electrical configuration provides good operational certainty as all the electrical batteries are arranged in parallel electrical connection with each other and all the converter devices are arranged in parallel electrical connection with each other.

The power distribution unit may also comprise a charging inlet configured to receive electrical power for charging the one or more electrical batteries.

The charging inlet is electrically connected to the one or more electrical batteries for providing electrical power to the one or more electrical batteries.

The converter devices of the power converter module comprise a power inverter configured to convert direct current (DC) to alternating current (AC). Accordingly, the converter devices are configured to convert direct current from the one or more electrical batteries to alternating current and provide the alternating current to the power outlet. The power outlet is an alternating current power outlet.

In some embodiments, the charging inlet is a direct current charging inlet. The direct current charging inlet is configured to receive direct current from an external power source. The external power source providing direct current may be an external electrical battery, solar panel or the like source of direct current. The charging inlet is further connected to the one or more electrical batteries for providing direct current to the one or more electrical batteries for charging the one or more electrical batteries.

In some other embodiments, the charging inlet is an alternating current charging inlet. The alternating current charging inlet is configured to receive alternating current from an external power source. The external power source providing alternating current may be an external wind turbine or an electricity network or the like source of alternating current. The converter devices of the power converter module further comprise a power rectifier configured to convert alternating current (AC) to direct current (DC). The power rectifier is connected to the charging inlet for receiving alternating current. Accordingly, the one or more converter devices or rectifiers are configured to convert alternating current from externa power source to direct current. The one or more rectifiers are electrically connected to the one or more electrical batteries for providing direct current to the one or more electrical batteries for charging the one or more electrical batteries.

### BRIEF DESCRIPTION OF THE DRAWINGS

The invention is described in detail by means of specific embodiments with reference to the enclosed drawings, in which
Figure 1 shows schematically an electrical configuration according to the present invention;
Figure 2 shows schematically another electrical configuration according to the present invention;
Figures 3 to 11 show schematically support structures according to the present invention; and
Figures 12 to 15 show schematically battery heating arrangements to the present invention.

### DETAILED DESCRIPTION OF THE INVENTION

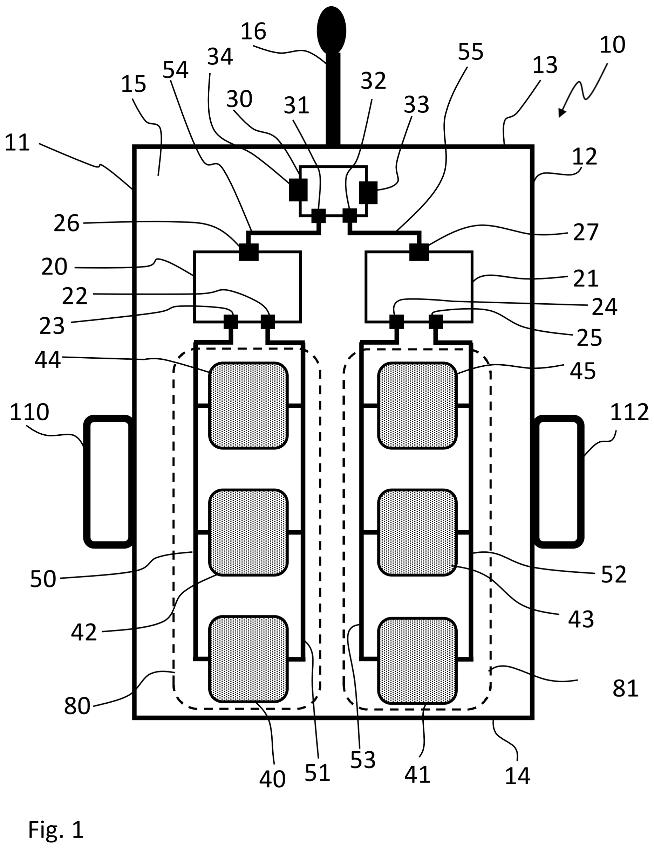

Figure 1 shows a movable charging vehicle 10. The movable charging vehicle is provided as trailer having a platform 11, 12, 13, 14, 15. The platform comprises bottom or lower support member 15 and sides or side support member 11, 12, 13, 14 surrounding the bottom 15 and extending upwards from the bottom 15. The trailer 10 further comprises a shaft 16 which is configured to be connectable to a hitch of a car, truck or a van. The trailer 10 further comprises two wheels 110, 112 supported to the platform 11, 12, 13, 14, 15 for providing the trailer as a movable vehicle. It should be noted, that the trailer may also comprise more than two wheels. The trailer 10 is a towable vehicle.

The trailer 10 and / or the platform there of is preferably made of aluminium.

The trailer 10 is provided with a battery module, a power converter module and a power distribution module. The battery module, the power converter module and the power distribution module are supported to the platform.

The battery module comprises one or more electrical batteries 40, 41, 42, 43, 44, 45.

The power converter module comprises two converter device 20, 21 electrically connected to the electrical batteries 40, 41, 42, 43, 44, 45 of the battery module. The converter devices 20, 21 of the power converter module being configured to convert the direct current to alternating current.

The converter devices 20, 21 comprise at least an inverter configured to convert the direct current to alternating current. Accordingly, the converter devices 20, 21 are configured to convert direct current from the electrical batteries 40, 41, 42, 43, 44, 45 to alternating current and provide the alternating current to the power outlet 33. The power outlet 33 is an alternating current power outlet.

The power distribution unit 30 comprises the power outlet 33 electrically connected to the one converter devices 20, 21 of power converter module. The power outlet 33 of the power distribution module 30 is configured to output alternating current from the movable power station 10.

The modules of the movable charging vehicle may be configured electrically in different ways.

As shown in figure 1, the battery module comprises a first battery group 80 comprising two or more first electrical batteries 40, 42, 44 and the power converter module comprises a first converter device 20. The two or more first electrical batteries 40, 42, 44 of the first battery group 80 are arranged in parallel electrical connection with each other and electrically connected to the first converter device 20.

Positive battery terminals of the two or more first electrical batteries 40, 42, 44 are connected to a first positive battery conductor 51 of the first battery group 80. The first positive battery conductor 51 of the first battery group 80 is connected to a first positive inlet port 22 of the first converter device 20.

Negative battery terminals of the two or more first electrical batteries 40, 42, 44 are connected to a first negative battery conductor 50 of the first battery group 80. The first negative battery conductor 50 of the first battery group 80 is connected to a first negative inlet port 23 of the first converter device 20.

Accordingly, the first electrical batteries 40, 42, 44 are connected in parallel electrical connection to each other and further to the first converter device 20.

The first converter device 20 is connected to the power distribution unit 30 and the power outlet 33 thereof. A first converter outlet port 26 of the first converter device 20 is electrically connected to a first distribution inlet port 31 of the power distribution unit 30 with a first converter conductor 54. The first distribution inlet port 31 is further electrically connected to the power outlet 33.

As shown in figure 1, the battery module comprises a second battery group 81 comprising two or more second electrical batteries 41, 43, 45 and the power converter module comprises a second converter device 21. The two or more second electrical batteries 41, 43, 45 of the second battery group 81 are arranged in parallel electrical connection with each other and electrically connected to the second converter device 21.

Positive battery terminals of the two or more second electrical batteries 41, 43, 45 are connected to a second positive battery conductor 52 of the second battery group 81. The second positive battery conductor 52 of the second battery group 81 is connected to a second positive inlet port 25 of the second converter device 21.

Negative battery terminals of the two or more second electrical batteries 41, 43, 45 are connected to a second negative battery conductor 53 of the second battery group 81. The second negative battery conductor 53 of the second battery group 81 is connected to a second negative inlet port 24 of the second converter device 21.

Accordingly, the second electrical batteries 41, 43, 45 are connected in parallel electrical connection to each other and further to the second converter device 21.

The second converter device 21 is connected to the power distribution unit 30 and the power outlet 33 thereof. A second converter outlet port 27 of the second converter device 21 is electrically connected to a second distribution inlet port 32 of the power distribution unit 30 with a second converter conductor 55. The second distribution inlet port 32 is further electrically connected to the power outlet 33.

The electrical configuration of figure 1 provides two separate battery-converter groups which are separately connected to the power outlet 33. Accordingly, the first battery group 80 and the second battery group 81 are arranged to operate independently of each other. Similarly, the first converter device 20 and the second converter device 21 are configured to operate independently of each other.

It should be noted the electrical configuration of figure 1 may also close three or more battery groups and three or more battery-converter groups provided in the same manner as the first and second battery groups 80, 21 and the corresponding battery-converter groups.

As shown in figure 1, the power distribution unit 30 comprises also a charging inlet 34 configured to receive electrical power for charging the one or more electrical batteries 40, 41, 42, 43, 44, 45.

The charging inlet 31 is electrically connected to the one or more electrical batteries 40, 41, 42, 43, 44, 45 for providing electrical power to the one or more electrical batteries 40, 41, 42, 43, 44, 45.

The charging inlet 34 is a direct current charging inlet or an alternating current charging inlet. Alternatively, the charging inlet 34 comprises a direct current charging inlet and an alternating current charging inlet.

The direct current charging inlet 34 is configured to receive direct current from an external power source. The direct current charging inlet 34 is electrically connected to the one or more electrical batteries 40, 41, 42, 43, 44, 45 for providing direct current to the one or more electrical batteries 40, 41, 42, 43, 44, 45 for charging the one or more electrical batteries 40, 41, 42, 43, 44, 45.

The alternating current charging inlet 34 is configured to receive alternating current from an external power source. The converter devices 20, 21 of the power converter module further comprise a power rectifier configured to convert alternating current to direct current. The power rectifier is connected to the alternating current charging inlet 34 for receiving alternating current. Accordingly, the one or more converter devices or rectifiers are configured to convert alternating current from externa power source to direct current. The one or more rectifiers are electrically connected to the one or more electrical batteries 40, 41, 42, 43, 44, 45 for providing direct current to the one or more electrical batteries 40, 41, 42, 43, 44, 45 for charging the one or more electrical batteries 40, 41, 42, 43, 44, 45.

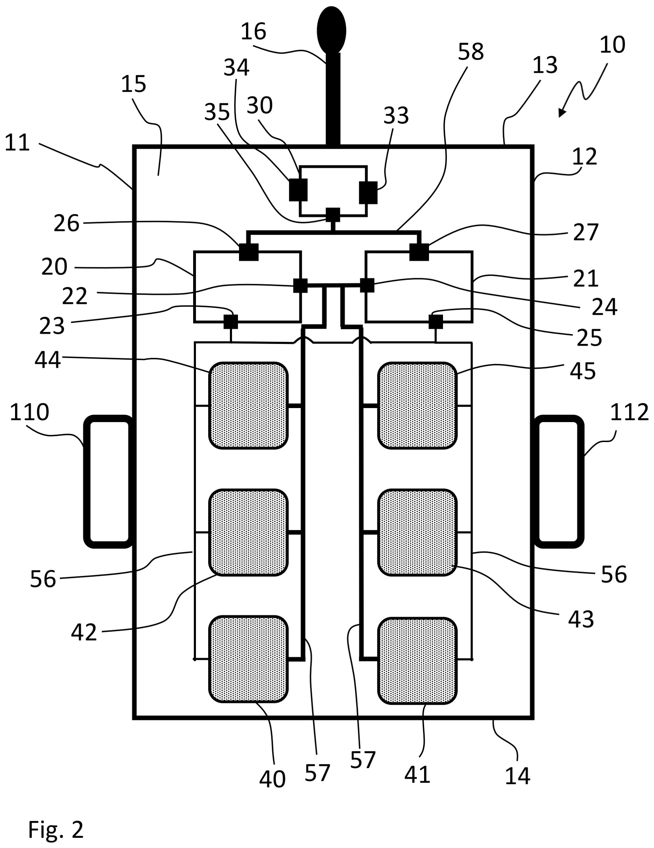

Figure 2 shows a movable charging vehicle 10 corresponding the movable charging vehicle of figure 1. The platform 11, 12, 13, 14, 15 of the towable trailer 10 of figure 2 correspond the same of figure 1.

The electrical configuration in figure 2 differs from the one of figure 1. However, the battery module, a power converter module and a power distribution module have similar components and elements but configured together in an alternative manner.

The battery module comprises one or more electrical batteries 40, 41, 42, 43, 44, 45 which are all connected in electrical parallel connection to each other.

The power converter module comprises two converter device 20, 21 electrically connected to the one or more electrical batteries 40, 41, 42, 43, 44, 45 of the battery module. The converter devices 20, 21 of the power converter module are configured to convert the direct current to alternating current.

The converter devices 20, 21 comprise at least an inverter configured to convert the direct current to alternating current. Accordingly, the converter devices 21, 21 are configured to convert direct current from the electrical batteries 40, 41, 42, 43, 44, 45 to alternating current and provide the alternating current to the power outlet 33. The power outlet 33 is an alternating current power outlet.

The power distribution unit 30 comprises the power outlet 33 electrically connected to the converter devices 20, 21 of power converter module. The power outlet 33 of the power distribution module 30 is configured to output alternating current from the movable power station 10.

The modules of the movable charging vehicle may be configured electrically in different ways.

As shown in figure 2, the battery module six electrical batteries 40, 41, 42, 43, 44, 45 and the power converter module comprises two converter devices 20, 21, the first converter device 20 and the second converter device 21. The electrical batteries 40, 41, 42, 43, 44, 45 are arranged in parallel electrical connection with each other and electrically connected to the converter devices 20, 21.

Positive battery terminals of the electrical batteries 40, 41, 42, 43, 44, 45 are connected to a positive battery conductor 57. The positive battery conductor 57 is connected to a first positive inlet port 22 of the first converter device 20 and to a second positive inlet port 24 of the second converter device 21.

Negative battery terminals of the electrical batteries 40, 41, 42, 43, 44, 45 are connected to a negative battery conductor 56. The negative battery conductor 56 is connected to a first negative inlet port 23 of the first converter device 20 and to a second negative inlet port 25 of the second converter device 21.

Accordingly the electrical batteries 40, 41, 42, 43, 44, 45 are connected in parallel electrical connection to each other and further to the both converter devices 20, 21.

The first converter device 20 and the second converter device 21 are electrically connected to each other and further to the power distribution unit 30 and the power outlet 33 thereof. A first converter outlet port 26 of the first converter device 20 is electrically connected to a distribution inlet port 35 of the power distribution unit 30 with a converter conductor 58. A second converter outlet port 27 of the second converter device 21 is electrically connected to a distribution inlet port 35 of the power distribution unit 30 with the converter conductor 58.

The converter conductor 58 is electrically connected to the first converter outlet port 26 of the first converter device 20 and to the second converter outlet port 27 of the second converter device 21, and further to the distribution inlet port 35 of the power distribution unit 30, as shown in figure 2.

Accordingly, the first and second converter devices 20, 21 are electrically connected parallel to each other and to the distribution inlet port 35.

The distribution inlet port 35 is further electrically connected to the power outlet 33.

Accordingly, each of the electrical batteries 40, 41, 42, 43, 44, 45 is connected to both of the converter devices 20, 21. Both converter devices are electrically connected to the power outlet 33.

The electrical configuration of figure 2 provides a configuration in which all electrical batteries 40, 41, 42, 43, 44, 45 are connected parallel to each other and to both the converter device 20, 21. The converter devices 20, 21 are connected parallel to each other and to the power outlet 33.

It should be noted, that the electrical configuration of the figure 2 can comprise two or more electrical batteries 40, 41, 42, 43, 44, 45 and two or more converter devices 20, 21.

The charging inlet 34 and the rectifier arrangement in connection with it may be similar as disclosed in connection with figure 1.

The electrical batteries 40, 41, 42, 43, 44, 45 may be damaged when subjected to mechanical shocks or vibration. The mechanical shocks and vibrations can be subjected to the electrical batteries 40, 41, 42, 43, 44, 45 via or from the platform 11, 12, 13, 14, 15 or the structures thereof.

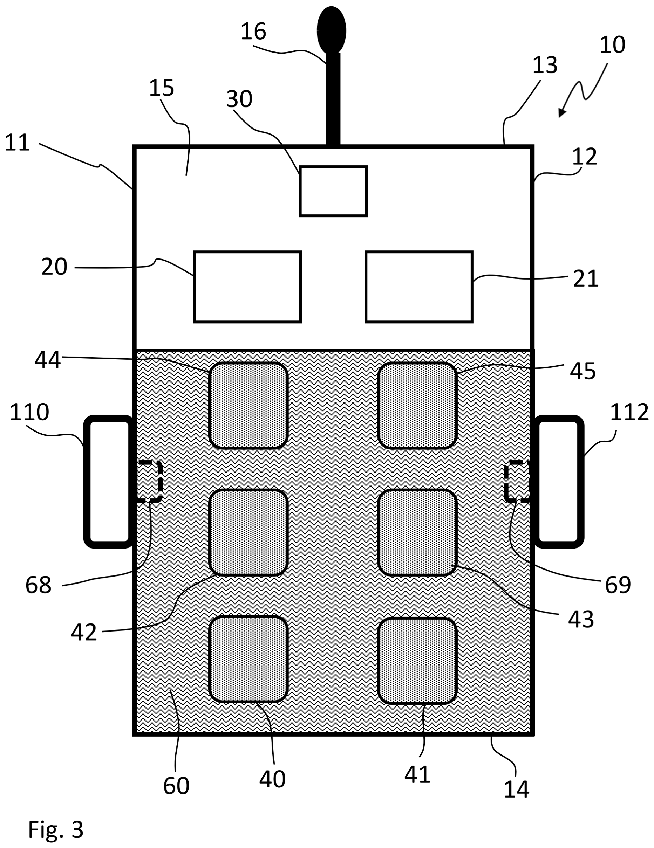

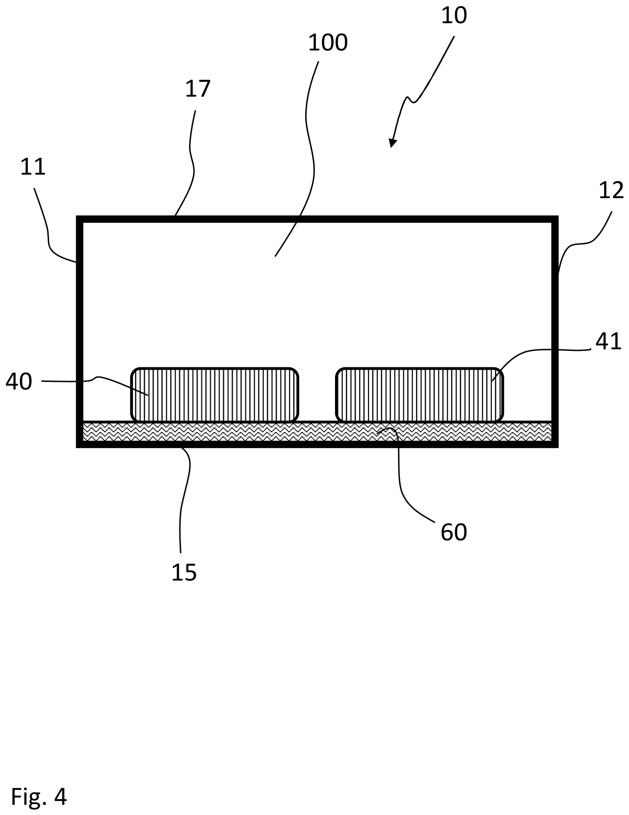

Figures 3 and 4 show a battery support arrangement in the movable charging vehicle 10. The movable charging vehicle 10 is a towable trailer as shown and described in connection with figures 1 and 2.

The electrical batteries 40, 41, 42, 43, 44, 45 are supported to the platform 11, 12, 13, 14, 15 of the trailer 10.

The trailer 10 comprises a trailer suspension elements 68, 69 which are arranged to provide suspension for the trailer 10 during movement. The trailer suspension elements 68, 69 can be any known trailer or car suspension elements. The trailer suspension elements 68, 69 are arranged to dampen shocks and vibrations to the trailer 10 and the platform 11, 12, 13, 14, 15 thereof generated during movement the trailer 10. The trailer suspension elements 68, 69 are provided in connection with the wheels 110, 112 and arranged to prevent or decrease shocks and vibrations to the platform 11, 12, 13, 14, 15.

It should be noted that trailer suspension elements 68, 69 may also be omitted and the trailer 10 comprises no trailer suspension elements.

The electrical batteries 40, 41, 42, 43, 44, 45 are supported to the platform 11, 12, 13, 14, 15 and the support members thereof with a floating battery support structure. The floating battery support structure separates the electrical batteries 40, 41, 42, 43, 44, 45 from the direct contact with the platform 11, 12, 13, 14, 15 and the support members thereof. Thus, shocks and vibrations of the platform are not directly transferred to the electrical batteries 40, 41, 42, 43, 44, 45.

The floating battery support structure comprises one or more damping elements configured absorb and dampen shock and vibrations. The one or more damping elements are made of elastic material or comprise an elastic structure or are made of elastic material and comprise an elastic structure.

In figures 3 and 4 the electrical batteries 40, 41, 42, 43, 44, 45 are supported on the bottom 15 of the platform. Thus, the electrical batteries 40, 41, 42, 43, 44, 45 are supported in vertical direction on the bottom 15 of the platform.

Alternatively, the electrical batteries 40, 41, 42, 43, 44, 45 are supported on a lower support member in vertical direction. The lower support member is the bottom 15 or some other support member provided to the platform.

The lower support member 15 is provided with a lower damping element 60 on the upper surface of the lower support member 15. The electrical batteries 40, 41, 42, 43, 44, 45 are arranged on the lower damping element 60. Thus, the floating battery support structure of figures 3 and 4 comprises the lower damping element 60 provided between the lower support member 15 and the electrical batteries 40, 41, 42, 43, 44, 45. The lower damping element 60 dampens shocks and vibrations in vertical direction.

The electrical batteries 40, 41, 42, 43, 44, 45 are attached or secured to the lower damping element 60.

In figures 3 and 4, the lower damping element 60 is provided as a planar damping mat, plate or layer.

The lower damping element 60 is common for the electrical batteries 40, 41, 42, 43, 44, 45 and the electrical batteries 40, 41, 42, 43, 44, 45 are supported on the common lower damping element 60.

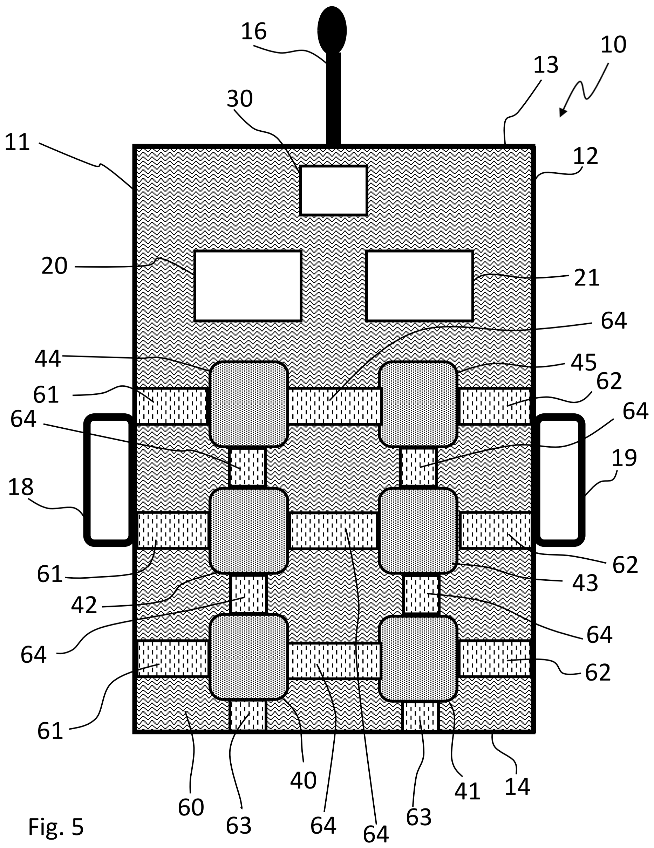

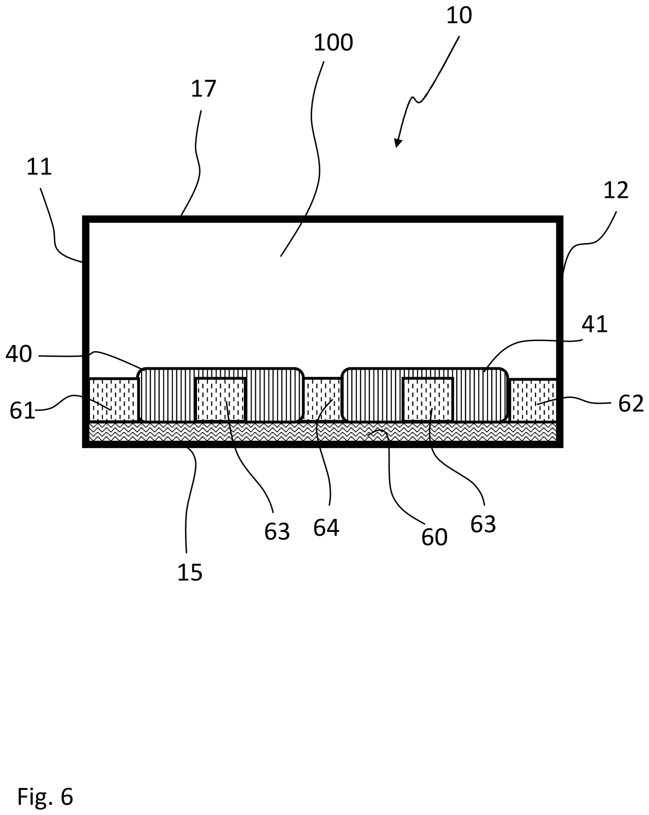

Figures 5 and 6 show a floating battery support structure in which the electrical batteries 40, 41, 42, 43, 44, 45 are supported with the floating batter support structure also in horizontal direction.

The electrical batteries 40, 41, 42, 43, 44, 45 are supported on the lower damping element 60 and the lower support member 15 in similar manner as in figures 3 and 4.

The platform comprises one or more side support members or sides 11, 12, 13, 14 extending upwards from the bottom 15. The floating battery support structure comprises side damping elements 61, 62, 63 provided between the side support members 11, 12, 13, 14 and the electrical batteries 40, 41, 42, 43, 44, 45. The electrical batteries 40, 41, 42, 43, 44, 45 are connected or supported to the side support members 11, 12, 13, 14 via the side damping elements 61, 62, 63.

The side damping elements 61, 62, 63 are connected or supported to the side support members 11, 12, 13, 14.

Accordingly, the electrical batteries 40, 41, 42, 43, 44, 45 are connected or supported to the side support members 11, 12, 13, 14 in horizontal direction with the side damping elements 61, 62, 63.

The electrical batteries 40, 41, 42, 43, 44, 45 are secured to the side damping elements 61, 62, 63 or pressed against the side damping elements 61, 62, 63.

The side damping elements 61, 62, 63 are arranged to extend between the electrical batteries 40, 41, 42, 43, 44, 45 and the side support members 11, 12, 13, 14.

The side damping elements 61, 62, 63 are arranged to extend between the electrical batteries 40, 41, 42, 43, 44, 45 and the side support members 11, 12, 13, 14 in horizontal direction.

The floating battery support structure of figures 5 and 6 comprises one or more battery damping elements 64 arranged between adjacent electrical batteries 40, 41, 42, 43, 44, 45. The electrical batteries are connected to adjacent electrical battery in horizontal direction via the one or more battery damping elements 64. The battery damping elements 64 are provided between adjacent electrical batteries 40, 41, 42, 43, 44, 45. The battery damping elements 64 prevent or dampen shocks and vibrations from traveling between adjacent electrical batteries 40, 41, 42, 43, 44, 45.

The electrical batteries 40, 41, 42, 43, 44, 45 are arranged adjacent to each other in horizontal direction and the battery damping elements 64 are arranged in horizontal direction between adjacent electrical batteries.

The battery damping element 64 is arranged to extend from one electrical battery 40, 41, 42, 43, 44, 45 to an adjacent electrical battery 40, 41, 42, 43, 44, 45.

The battery damping element 64 is arranged to extend from one electrical battery 40, 41, 42, 43, 44, 45 to an adjacent electrical battery 40, 41, 42, 43, 44, 45 in horizontal direction.

The battery damping elements 64 are connected or supported to the electrical batteries 40, 41, 42, 43, 44, 45.

Accordingly, the electrical batteries 40, 41, 42, 43, 44, 45 are connected to each other in horizontal direction with the battery damping elements 64.

The electrical batteries 40, 41, 42, 43, 44, 45 are secured to the battery damping elements 64 or pressed against the battery damping elements 64.

In figures 5 and 6, the converter devices 20, 21 of the power converter module and the power distribution unit 30 are supported to the platform 11, 12, 13, 14, 15 with a floating component support structure. Therefore, the floating component support structure separates the converter devices 20, 21 and the power distribution unit 30 from the direct contact with the platform 11, 12, 13, 14, 15 and the support members thereof. Thus, shocks and vibrations of the platform are not directly transferred to the converter devices 20, 21 and the power distribution unit 30.

In the figures 5 and 6, the converter devices 20, 21 and the power distribution unit 30 are arranged on the lower damping element 60. Thus, the floating component support structure of figures 5 and 6 comprises the lower damping element 60 provided between the lower support member 15 and the converter devices 20, 21 and the power distribution unit 30. The lower damping element 60 dampens shocks and vibrations in vertical direction.

The converter devices 20, 21 and the power distribution unit 30 are attached or to the lower damping element 60.

It should be noted that alternatively only the converter devices 20, 21 or the power distribution unit 30 may be arranged on the lower damping element 60.

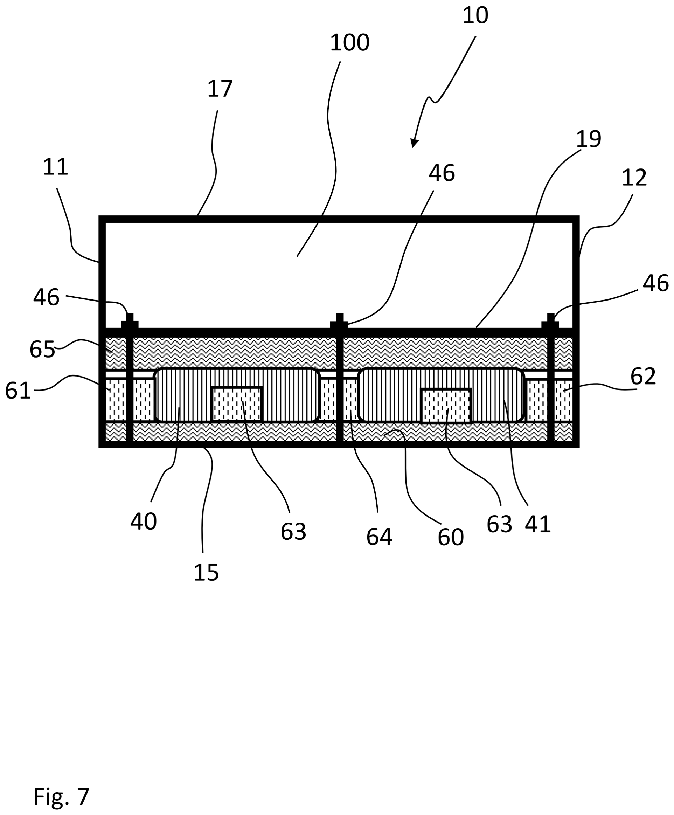

In figure 7 the electrical batteries 40, 41, 42, 43, 44, 45 arranged between the lower damping element 60 and an upper damping element 65. The electrical batteries 40, 41, 42, 43, 44, 45 are supported in damping elements 60, 65 on both sides in vertical direction.

The upper damping element 65 is arranged on the upper surface or against the upper surface of the electrical batteries 40, 41, 42, 43, 44, 45.

The electrical batteries 40, 41, 42, 43, 44, 45 are arranged in vertical direction between the lower damping element 60 and the upper damping element 65.

In figure 7 the platform of the trailer comprises an intermediate support member 19 arranged in vertical direction above the lower support member 15. The electrical batteries 40, 41, 42, 43, 44, 45, the lower damping element 60 and the upper damping element 65 are arranged between the lower support member 15 and the intermediate support member 19.

The floating battery support structure comprises compression members 46 arranged to compress the electrical batteries 40, 41, 42, 43, 44, 45 between the lower damping element 60 and the upper damping elements 65.

The compression members 46 arranged to compress the upper damping element 65 towards or against the electrical batteries 40, 41, 42, 43, 44, 45. The electrical batteries 40, 41, 42, 43, 44, 45 are further compressed against the lower damping element 60. Thus, the electrical batteries 40, 41, 42, 43, 44, 45 secured with the compression.

The compression members 46 may be provided as bolts with nuts, clamps or the like mechanical compression members.

The bolts 46 are connected to and arranged to extend in vertical direction from the intermediate support member 19. The bolts 46 are connected to the lower support member 15 or to the side support members 11, 12, 13, 14.

Turning the nuts in connection with the bolts 46 is arranged to compress the upper damping element 65 towards or against the electrical batteries 40, 41, 42, 43, 44, 45.

It should be noted that the compression arrangement configured to compress the electrical batteries 40, 41, 42, 43, 44, 45 between the lower damping element 60 and the upper damping elements 65 may be carried by several different mechanical solutions. The present invention is not restricted to any particular compression arrangement.

Each electrical battery 40, 41, 42, 43, 44, 45 usually comprises battery management module configured to manage operation of the electrical battery 40, 41, 42, 43, 44, 45. Alternatively, the electrical batteries 40, 41, 42, 43, 44, 45 comprise a common battery management module configured to manage operation of the electrical batteries 40, 41, 42, 43, 44, 45. The battery management module is electrically connected to one or more of the electrical batteries 40, 41, 42, 43, 44, 45.

The battery management module is arranged in connection with the electrical batteries 40, 41, 42, 43, 44, 45.

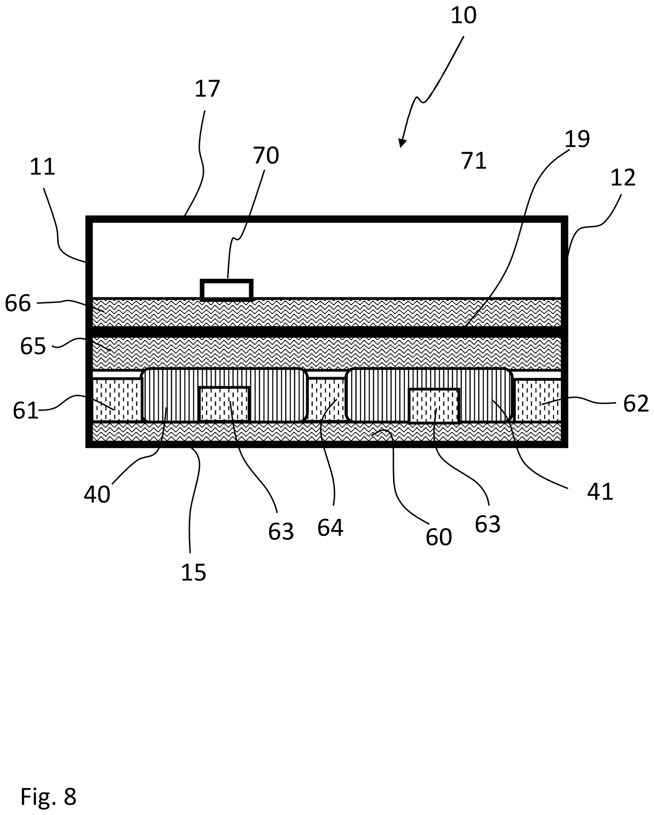

Figure 8 shows the battery management module 70 which is common for the electrical batteries 40, 41, 42, 43, 44, 45.

The battery management module 70 is supported to the platform via a module damping element 66.

The module damping element 66 is supported in the upper surface of the intermediate support member 19. The module damping element 66 is arranged between the battery management module 70 and the intermediate support member 19.

The module damping element 66 is arranged to prevent or dampen shocks and vibrations to the battery management module 70.

Alternatively, the battery management module 70 is supported on the lower damping element 60.

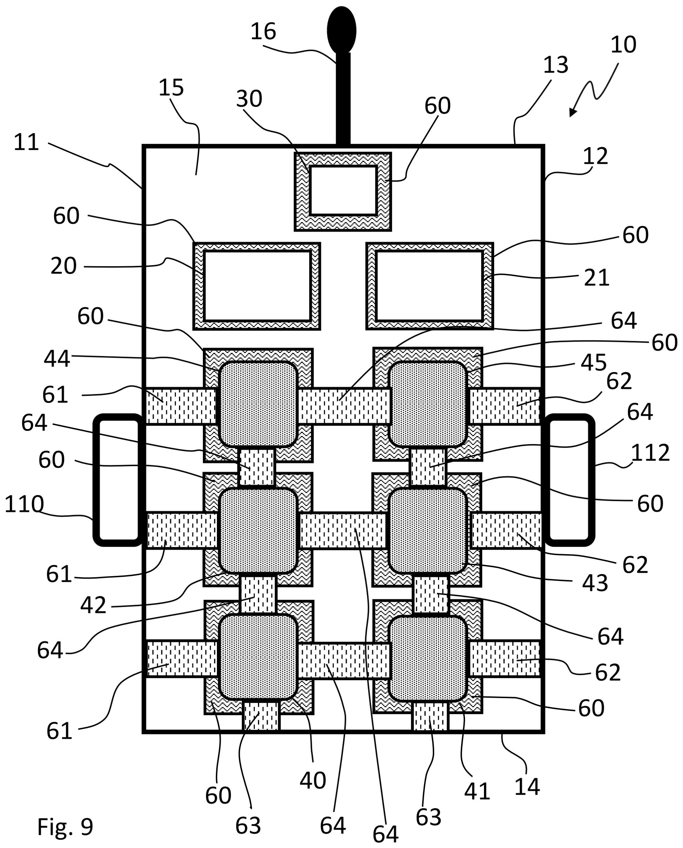

In figure 9, the floating battery support structure comprises a separate lower damping element 60 for each of the electrical batteries 40, 41, 42, 43, 44, 45. Thus, each electrical batteries 40, 41, 42, 43, 44, 45 is separately and independently supported in vertical direction.

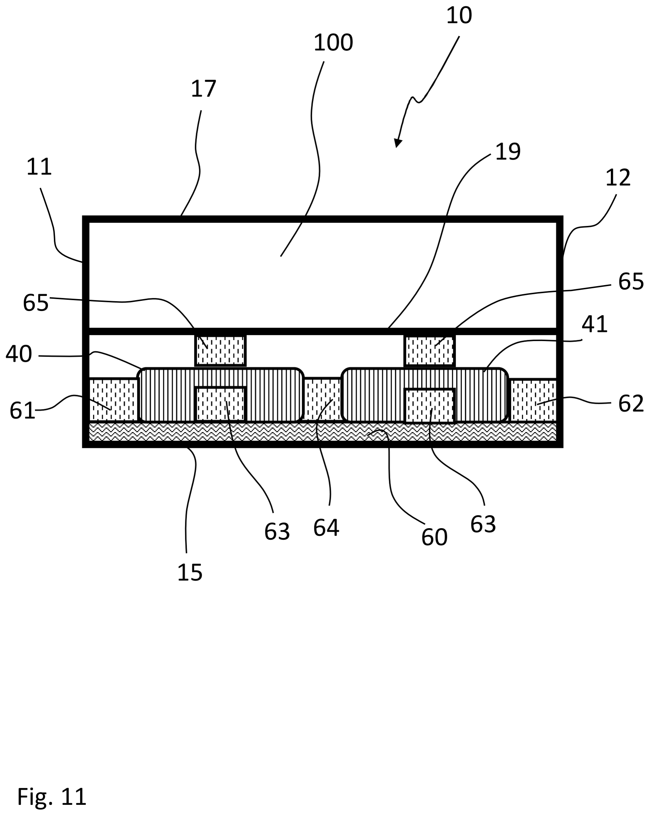

Each electrical battery 40, 41, 42, 43, 44, 45 is also provided with a separate upper damping element 65 as shown in figure 11.

Also in this solution the floating battery support structure may comprise the compressions members 46 similarly as in figure 7.

Further, alternatively the upper damping element 65 may be common for all of the electrical batteries 40, 41, 42, 43, 44, 45 as shown in figure 7. The separate lower damping element 60 is provided for each of the electrical batteries 40, 41, 42, 43, 44, 45.

Further, alternatively the lower damping element 65 may be common for all of the electrical batteries 40, 41, 42, 43, 44, 45 as shown in figure 7. The separate upper damping element 65 is provided for each of the electrical batteries 40, 41, 42, 43, 44, 45.

In figure 9, the converter devices 20, 21 are provided with separate lower damping elements 60. Thus, converter devices 20, 21 are separately and independently supported in vertical direction to the platform with the separate lower damping elements 60.

Further, the power distribution unit 30 with a separate lower damping element 60. Thus, power distribution unit 30 is separately and independently supported in vertical direction to the platform with the separate lower damping elements 60.

Alternatively, the converter devices 20, 21 and the power distribution unit 30 are supported in vertical direction to the platform with common lower damping element 60 which is separate form the lower damping element or lower damping elements 60 on which the electrical batteries 40, 41, 42, 43, 44, 45 are supported.

In figure 9, the side damping elements 61, 62, 63 are provided in similar manner as in figures 5 to 7.

Alternatively, the side damping elements 61, 62, 63 may be omitted when each electrical batteries 40, 41, 42, 43, 44, 45 is separately and independently supported in vertical direction with separate lower damping elements 60.

In figure 9, the battery damping elements 64 are provided in similar manner as in figures 5 to 7.

Alternatively, the battery damping elements 64 may be omitted when each electrical batteries 40, 41, 42, 43, 44, 45 is separately and independently supported in vertical direction with separate lower damping elements 60.

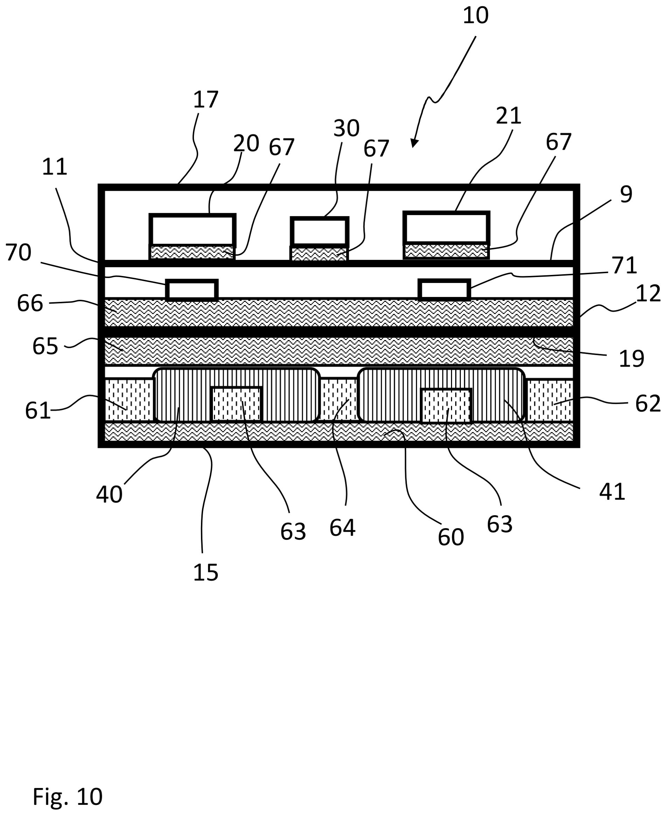

In figure 10 the platform is provided with a component support member 9. The converter devices 20, 21 of the power converter module are supported to the component support member 9 with the floating component support structure. The floating component support structure comprises component damping members 67 arranged between the converter devices 20, 21 and the component support member 9.

In figure 10 each converter device 20, 21 is supported to the component support member 9 with a separate component damping member 67.

Alternatively, converter devices 20, 21 are supported to the component support member 9 with a common component damping member 67 arranged between the converter devices 20, 21 and the component support member 9.

The power distribution unit 30 is supported to the component support member 9 with the floating component support structure. The floating component support structure comprises component damping members 67 arranged between the power distribution unit 30 and the component support member 9.

In figure 10 the power distribution unit 30 is also supported to the component support member 9 with a separate component damping member 67.

Alternatively, the power distribution unit 30 and the converter devices 20, 21 are supported to the component support member 9 with the common component damping member 67 arranged between the converter devices 20, 21 and the component support member 9, and between the power distribution unit 30 and the component support member 9.

The bottom 15 may also be arranged as the component support member as in figure 9.

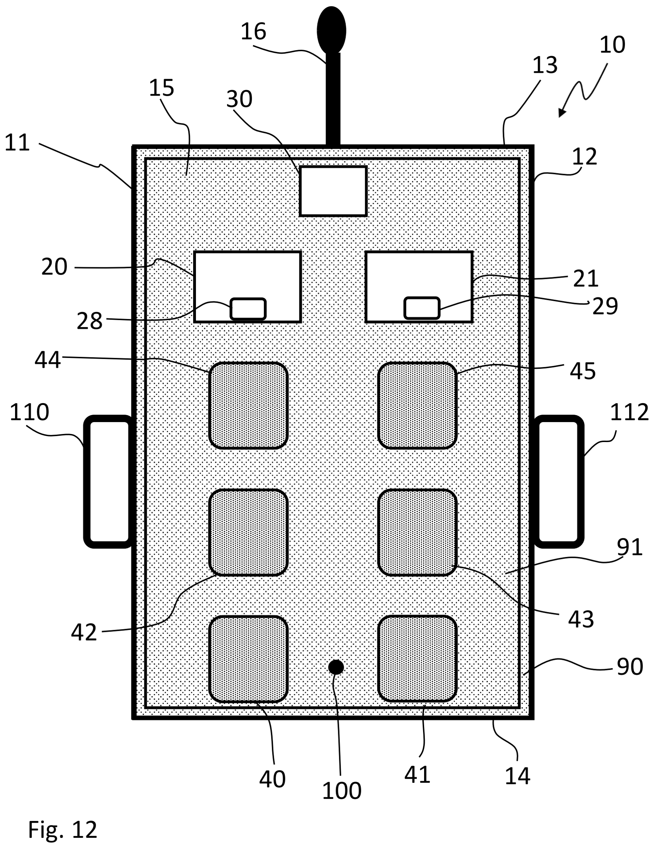

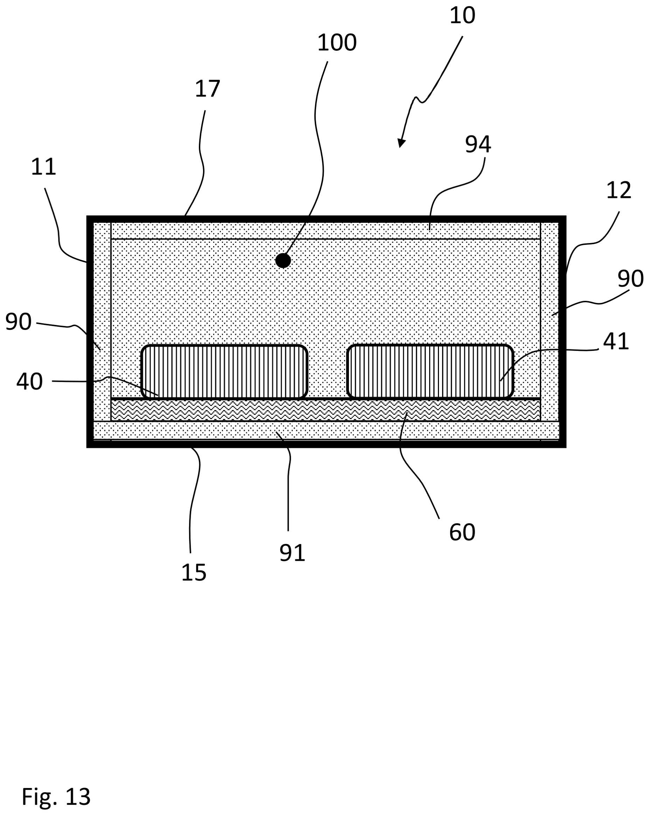

In figures 12 and 13, the movable charging vehicle of the trailer 10 or the platform thereof comprises a thermally insulated battery chamber 100. The electrical batteries 40, 41, 42, 43, 44, 45 of the battery module are arranged inside the thermally insulated battery chamber 100.

The inner space of the trailer 10 is formed as the thermally insulated battery chamber 100 in figure 12. The platform and the support members 11, 12, 13, 14, 15, 17 thereof are arranged to define the thermally insulated battery chamber 100.

The platform and the support members 11, 12, 13, 14, 15, 17 thereof are provided with insulation elements 90, 91, 94.

The bottom or lower support member 15 of the trailer 10 is provided with a lower insulation element 91. The side support members 11, 12, 13, 14 are provided with side insulation elements 90. The cover the platform or the upper support member 17 is provided an upper insulation element 94.

The lower insulation element 91 is provided on inner side of the lower support member 15 or inside the battery chamber 100. The side insulation elements 90 are provided on inner side of the side support members 11, 12, 13, 14. The upper insulation element 94 is provided on inner side of the upper support member 17 or inside the battery chamber 100.

The insulation elements 90, 91, 94 are made of any known thermal insulation material.

The insulation elements 90, 91, 94 are made of thermal insulation plates or sheet such as polyurethane sheet.

The thermally insulated battery chamber 100 is covered or lined with the insulation elements 90, 91, 94.

The movable charging vehicle or trailer 10 further comprises a heating arrangement arranged to provide thermal energy into the thermally insulated battery chamber 100.

In figure 12 the heating arrangement comprise the converter devices 20, 21 of the power converter module. The converter devices 20, 21 generate thermal energy or heat during use in the converting direct current to alternating current and / or converting alternating current to direct current. The converter devices 20, 21 comprise cooling systems 28, 29 or the like to discharge thermal energy or heat generated during use out of the converter devices 20, 21.

In figures 12 and 13, the converter devices 20, 21 are arranged inside the thermally insulated battery chamber 100. Thus, the thermal energy generated and discharged from the converter devices 20, 21 is discharged directly into the thermally insulated battery chamber 100.

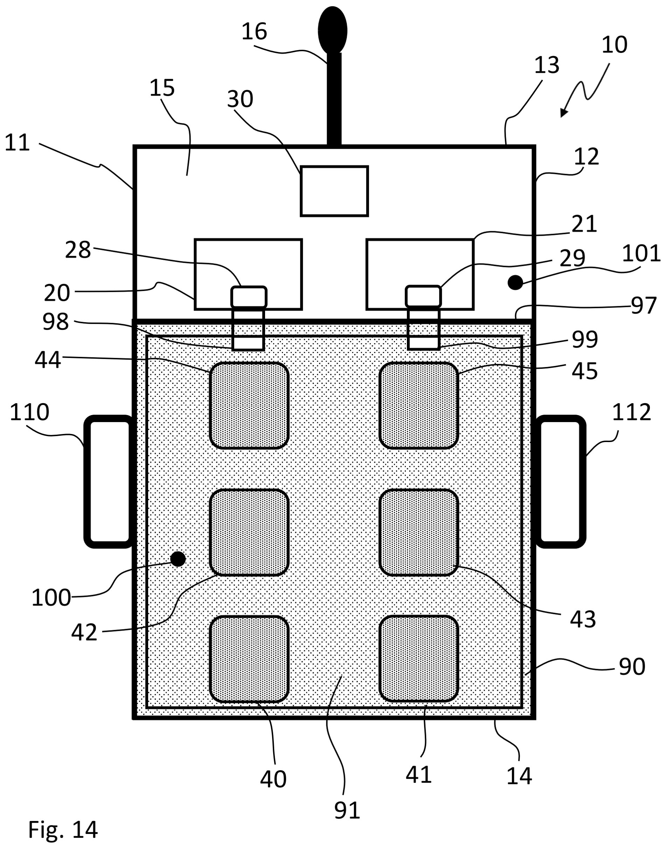

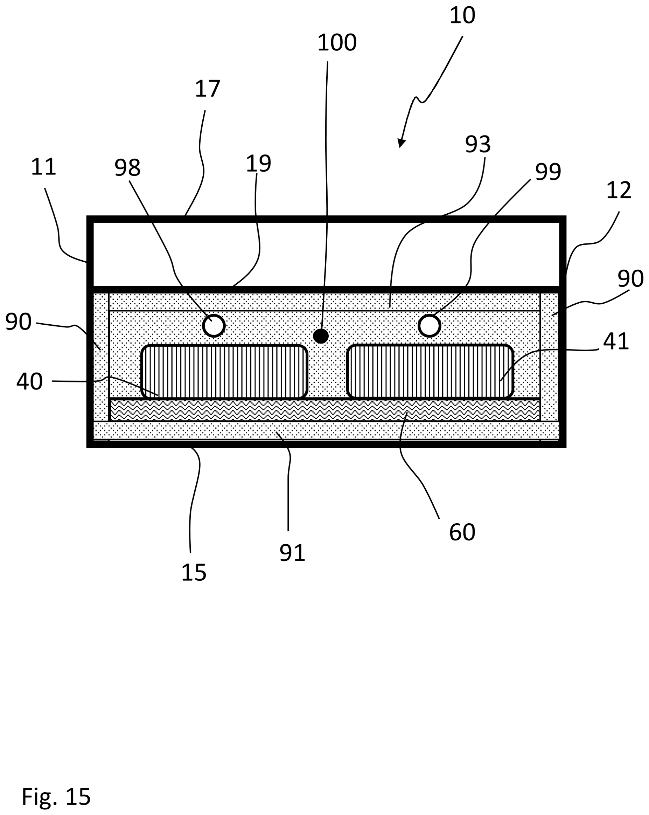

In figures 14 and 15 the movable charging vehicle of the trailer 10 or the platform thereof comprises a separate thermally insulated battery chamber 100. The electrical batteries 40, 41, 42, 43, 44, 45 of the battery module are arranged inside the separate thermally insulated battery chamber 100.

The separate thermally insulated battery chamber 100 means that the entire trailer or trailer space defined by the platform or the support members thereof is not formed as the thermally insulated battery chamber 100.

The separate thermally insulated battery chamber 100 may be defined or formed in any manner.

In the figure 14, the separate thermally insulated battery chamber 100 is defined by the bottom or lower support member 15, the side support members 11, 12 and 14, the upper support member or cover 17 and a dividing support member 97. The dividing support member 97 is arranged to extend upwards from the bottom 15. The dividing support member 97 is arranged divide the trailer 0 into the thermally insulated battery chamber 100 and to a component chamber 101.

The support members 11, 12, 14, 15, 97 are provided with insulation elements 90, 91, 94, as shown in figures 14 and 15.

The bottom or lower support member 15 of the trailer 10 is provided with a lower insulation element 91. The side support members 11, 12, 14 and the dividing support member 97 are provided with side insulation elements 90. The cover the platform or the upper support member 17 is provided an upper insulation element 94.

The lower insulation element 91 is provided on inner side of the lower support member 15 or inside the battery chamber 100. The side insulation elements 90 are provided on inner side of the side support members 11, 12, 14 and the dividing support member 97. The upper insulation element 94 is provided on inner side of the upper support member 17 or inside the battery chamber 100.

The insulation elements 90, 91, 94 are made of any known thermal insulation material.

The insulation elements 90, 91, 94 are made of thermal insulation plates or sheet such as polyurethane sheet.

The separate thermally insulated battery chamber 100 is covered or lined with the insulation elements 90, 91, 94.

The movable charging vehicle or trailer 10 further comprises a heating arrangement arranged to provide thermal energy into the thermally insulated battery chamber 100.

In figures 14 and 15 the heating arrangement comprise the converter devices 20, 21 of the power converter module. The converter devices 20, 21 generate thermal energy or heat during use in the converting direct current to alternating current and / or converting alternating current to direct current. The converter devices 20, 21 comprise cooling systems 28, 29 or the like to discharge thermal energy or heat generated during use out of the converter devices 20, 21.

In figures 14 and 15, the converter devices 20, 21 are arranged outside the thermally insulated battery chamber 100. The converter devices 20, 21 are arranged into the component chamber 101.

The heating arrangement comprises heat transfer elements 98, 99 arranged to transfer thermal energy from the one or more converter devices 20, 21 into the thermally insulated battery chamber 100.

The heat transfer elements 98, 99 are arranged to transfer thermal energy from the converter devices 20, 21 outside the thermally insulated battery chamber 100 into the thermally insulated battery chamber 100.

The heat transfer elements 98, 99 are provided in connection with the cooling systems 28, 29 of the converter devices 20, 21 and arranged to transfer thermal energy from the cooling systems 28, 29 into the thermally insulated battery chamber 100.

The heat transfer elements 98, 99 are configured to receive thermal energy from the converter devices 20, 21 or the cooling systems 28, 29 thereof, transfer the thermal energy into the thermally insulated battery chamber 100 and further to release the thermal energy into the thermally insulated battery chamber 100.

The heat transfer elements 98, 99 are provided in connection with the cooling systems 28, 29 of the one or more converter devices 20, 21 and arranged to transfer thermal energy from the cooling systems 28, 29 of the one or more converter devices 20, 21 into the thermally insulated battery chamber 100.

In figures 14 and 15 the cooling systems 28, 29 of the converter devices 20, 21 are air cooling systems arranged to discharge heated air from the converter devices 20, 21. The heat transfer elements 98, 99 comprise flow ducts arranged extend from outside the thermally insulated battery chamber 100. The flow ducts 98,99 are arranged extend from the converter devices 20, 21 or the cooling systems 28, 29 thereof into the thermally insulated battery chamber 100. The flow ducts 98, 99 are open to the thermally insulated battery chamber 100 for releasing thermal energy into the thermally insulated battery chamber 100.

The floating support structures and the electrical configurations disclosed in connection with figures 1 to 11 may be utilized together with the thermally insulated battery chamber of figures 12 to 15, or vice versa.

The invention has been described above with reference to the examples shown in the figures. However, the invention is in no way restricted to the above examples but may vary within the scope of the claims.

## Claims

1. A movable charging vehicle (10), **characterized in that** the movable charging vehicle (10) comprises:
- a platform (9, 11, 12, 13, 14, 15, 16, 17, 19) for supporting charging vehicle modules (40, 41, 42, 43, 44, 45, 20, 21, 30),
- a battery module comprising electrical batteries (40, 41, 42, 43, 44, 45),
- a power converter module comprising at least one converter device (20, 21) electrically connected to the one or more electrical batteries (40, 41, 42, 43, 44, 45) of the battery module, the at least one converter device of the power converter module being configured to convert the direct current to alternating current,
- a power distribution unit (30) comprising a power outlet (33) electrically connected to at least one converter device (20, 21) of the power converter module (20, 21), the power outlet (30) of the power distribution module (30) being configured to output alternating current from the movable charging vehicle (10), and
the platform (9, 11, 12, 13, 14, 15, 16, 17, 19) comprises a thermally insulated battery chamber (100), the one or more one or more electrical batteries (40, 41, 42, 43, 44, 45) of the battery module are arranged inside the thermally insulated battery chamber (100).

2. A movable charging vehicle (10) according to claim 1, **characterized in that** the movable charging vehicle comprises a heating arrangement arranged to provide thermal energy generated during use by the one or more converter devices (20, 21) of the power converter module to the thermally insulated battery chamber (100).

3. A movable charging vehicle (10) according to claim 2, **characterized in that** the heating arrangement comprises the one or more converter devices (20, 21) arranged inside the thermally insulated battery chamber (100), and the one or more converter devices (20, 21) are arranged to release thermal energy into the thermally insulated battery chamber (100) during use.

4. A movable charging vehicle (10) according to claim 2, **characterized in that** the one or more converter devices (20, 21) are arranged outside the thermally insulated battery chamber (100), and that the heating arrangement comprises one or more heat transfer elements (98, 99) arranged to transfer thermal energy from the one or more converter devices (20, 21) into the thermally insulated battery chamber (100).

5. A movable charging vehicle (10) according to any one of claims 2 to 4, **characterized in that**:
- the one or more converter devices (20, 21) comprise a cooling system (28, 29) arranged to cool the one or more converter devices (20, 21) and discharge thermal energy from the one or more converter devices (20, 21); or
- the one or more converter devices (20, 21) comprise a cooling system (28, 29) arranged to cool the one or more converter devices (20, 21) and discharge thermal energy from the one or more converter devices (20, 21), the cooling system (28, 29) is an air cooling system arranged to discharge heated air from the one or more converter devices (20, 21).

6. A movable charging vehicle (10) according to claim 5, **characterized in that** the one or more heat transfer elements (98, 99) are provided in connection with the cooling system (28, 29) of the one or more converter devices (20, 21) and arranged to transfer thermal energy from the cooling system (28, 29) of the one or more converter devices (20, 21) into the thermally insulated battery chamber (100).

7. A movable charging vehicle (10) according to claim 6, **characterized in that**:
- the one or more heat transfer elements (98, 99) comprise a flow duct arranged to transfer heated air discharged from the one or more converter devices (20, 21) or the cooling system (28, 29) thereof into the thermally insulated battery chamber (100); or
- the one or more heat transfer elements (98, 99) comprise a heat conduction element arranged to transfer thermal energy from the one or more converter devices (20, 21) or the cooling system (28, 29) thereof into the thermally insulated battery chamber (100) with conduction.
